# EUROPEAN PATENT SPECIFICATION

(11) **EP 4 267 536 B1**
(45) Date of publication and mention of the grant of the patent: **10.09.2025**
(21) Application number: 21840998.5
(22) Date of filing: 13.12.2021
(51) Int. Cl.: C05G 5/12, C05C 9/00

(54) **UREA CALCIUM SULFATE COATED UREA FERTILIZER AND BLENDS THEREOF**
HARNSTOFF-CALCIUMSULFAT-BESCHICHTETER HARNSTOFFDÜNGER UND MISCHUNGEN DARAUS
ENGRAIS À BASE D'URÉE ENROBÉ DE SULFATE DE CALCIUM-URÉE ET MÉLANGES ASSOCIÉS

(30) Priority: 23.12.2020 US 202063129843 P
(43) Date of publication of application: 01.11.2023
(73) Proprietor: Sabic Agri-Nutrients Company, 31961 Jubail (SA)
(72) Inventor: SHARMA, Yogesh Omprakash, Bangalore 562125 (IN); BAG, Nilkamal, Bangalore 562125 (IN); KELLS, Andrew George, Redcar and Cleveland Wilton TS10 4RF (GB)
(74) Representative: J A Kemp LLP
(86) International application number: PCT/IB2021/061655
(87) International publication number: WO 2022/137011

(56) References cited:
- EP-A1- 3 372 576
- WO-A1-2018/211448
- WO-A1-2020/044189
- US-A1- 2020 148 607
- US-A1- 2020 207 673

## Description

### A. Field of the Invention

The invention generally concerns coated urea fertilizer granules. In particular, the invention concerns urea calcium sulfate adduct coated urea fertilizer granules and blends thereof.

### B. Description of Related Art

Soil nutrients, such as nitrogen, phosphorus, potassium, and sulfur, as well as second and trace nutrients such as calcium, iron, zinc, copper, and magnesium, are useful for achieving thriving agriculture and growth of plants. Upon repeated planting cycles, the quantity of these nutrients in the soil may be depleted, resulting in inhibited plant growth and decreased production. To counter this effect, fertilizers have been developed to help replace the depleted vital nutrients and to create the right balance of nutrients.

Fertilizers containing multiple plant nutrients, such as nitrogen, phosphorus, potassium, and sulfur, have been used to provide multiple nutrients with single applications. However, blends of urea, a commonly used nitrogen nutrient, with other fertilizers, for example phosphorus, potassium, and sulfur fertilizers, are often not stable. Such blends can form wet caking and sticky mass over time and/or with storage, making them less useful for fertilizer applications. Further, urea can undergo rapid hydrolysis in soil by soil bacteria. Rapid hydrolysis of urea can reduce amount of nitrogen available for plants, deteriorate soil health, and can create environmental problems such as greenhouse emissions and groundwater contamination.

Attempts have been made to prepare relatively stable fertilizer compositions containing urea, and blends of urea and other plant nutrients. Alternative layers containing inorganic acids and base have been used to coat and stabilize urea. For example, EP2890662A2, discloses fertilizer compositions containing urea coated with a layer of an acid and a layer of a base. However, to achieve relatively high urea stability, urea granules may need coatings of multiple alternate layers of inorganic acids and bases, and may create additional problems resulting from use of large amounts of acid and base. US4026696A and US4028088A disclose use of high amounts of calcium sulfate, e.g. at least 10 wt. % to stabilize nitrogen fertilizers. However use of such high amounts of calcium sulfate might limit amounts of other nutrients, e.g., nitrogen, in the fertilizer composition.

US 2020/0207673 A1 describes calcium sulfate urea granules and methods for their production and use. EP 3 372 576 A1 describes a urea-based composition and a method of its manufacture. WO 2018/211448 A1 describes anti-caking fertilizer compositions. WO 2020/044189 A1 describes a seaweed extract coated fertilizer. US 2020/0148607 A1 describes calcium sulfate urea granules and methods for their production and use.

### SUMMARY OF THE INVENTION

A solution to at least some of the problems discussed above has been discovered. In one aspect, the solution resides in providing urea granules coated with a urea calcium sulfate (UCS) adduct. It was found that coating urea with a UCS adduct can stabilize urea. Efficient nitrogen uptake by plants and relatively lower urea nitrogen losses are achieved by using the UCS coated urea granules. Further, as illustrated in a non-limiting manner in the examples, fertilizer blends containing the UCS coated urea granules and other fertilizers are relatively stable over time and form no or less caking compared to fertilizer blends containing uncoated urea granules.

One aspect of the present invention is directed to a fertilizer granule. The fertilizer granule comprises: a core comprising at least 90 wt. % of urea; and a shell comprising a urea calcium sulfate (UCS) adduct, wherein the shell covers at least a portion of an outer surface of the core, and wherein the calcium (Ca) content of the fertilizer granule is 2.8 wt. % or less and the nitrogen (N) content of the fertilizer granule is 41 wt. % or more. The core comprises at least 90 w.% urea. In some aspects, the core comprises at least 90 wt. % of urea, based on the total weight of the core. The shell comprises a urea calcium sulfate (UCS) adduct. The UCS adduct can have the chemical formula of CaSO₄.4CO(NH₂)₂. In some aspects, the shell can contain 20 wt. % to 100 wt. % of the UCS adduct, or 30 wt. % to 90 wt. %, or 45 wt. % to 80 wt. %, based on the total weight of the shell.

In some aspects, the shell further comprises urea and calcium sulfate. In some aspects, the shell can contain additional urea and additional calcium sulfate that is not comprised as an adduct ("present freely"). In some aspects, at least 95 wt. % of the shell can be comprised of the UCS adduct, urea (e.g., present freely), and calcium sulfate (e.g., present freely). In some aspects, the shell can contain i) 18 wt. % to 40 wt. % of nitrogen (N) (e.g., from urea present freely and as adduct), ii) 2 wt. % to 18 wt. % of calcium (Ca) (e.g., from calcium sulfate present freely and as adduct) and iii) 1 wt. % to 12 wt. % of sulfur (S) (e.g., from calcium sulfate present freely and as adduct), based on the total weight of the shell. In some aspects, a wt. % of nitrogen (N) to calcium (Ca) in the shell can be 15:1 to 1:1, preferably 5:1 to 2:1. In some aspects, the total Ca content of the fertilizer granule is 1.8 wt. % or less. The total nitrogen (N) content of the fertilizer granule is 41 wt. % or more.

The core and/or the shell can further independently contain a urease inhibitor, a nitrification inhibitor, one or more secondary nutrients, one or more micronutrients, or one or more binders, or any combinations thereof. In some aspects, the urease inhibitor can be a thiophosphoric triamide derivative, such as N-(n-butyl) thiophosphoric triamide (NBPT). In some aspects, the core can contain 0.01 wt. % to 0.07 wt. % of a urease inhibitor, such as NBPT, based on the total weight of the core. In some aspects, the shell can contain 0.01 wt. % to 0.07 wt. % of a urease inhibitor, such as NBPT, based on the total weight of the shell. In some aspects, the nitrification inhibitor can be 3,4-dimethylpyrazole phosphate (DMPP), thio-urea (TU), dicyandiamide (DCD), 2-Chloro-6-(trichloromethyl)-pyridine (Nitrapyrin), 5- Ethoxy-3-trichloromethyl -1, 2, 4-thiadiazol (Terrazole), 2-Amino-4-chloro-6-methyl- pyrimidine (AM), 2-Mercapto-benzothiazole (MBT), or 2-Sulfanimalamidothiazole (ST) or any combination thereof, preferably DCD. In some aspects, the core can contain 0.01 wt. % to 0.04 wt. % of a nitrification inhibitor, such as DCD, based on the total weight of the core. In some aspects, the shell can contain 0.01 wt. % to 0.04 wt. % of a nitrification inhibitor, such as DCD, based on the total weight of the shell. The micronutrient can be a botanically acceptable form of an inorganic or organometallic compound such as boron, copper, iron, chloride, manganese, molybdenum, nickel, or zinc. In some aspects, the core can contain 0.1 wt. % to 1.0 wt. % of micronutrients, based on the total weight of the core. In some aspects, the shell can contain 0.1 wt. % to 1.0 wt. % of micronutrients, based on the total weight of the shell. A secondary nutrient is a substance that can deliver calcium, magnesium, and/or sulfur to a plant. In some aspects, the core can contain 0.5 wt. % to 2.5 wt. % of secondary nutrients, such as calcium sulfate, lime, superphosphate, or any combinations thereof, based on the total weight of the core. In some aspects, the shell in addition to calcium and sulfate present as calcium sulfate (freely and as the adduct) can contain 0.5 wt. % to 2.5 wt. % of other secondary nutrients, such as lime, superphosphate, or any combinations thereof, based on the total weight of the shell. The binder can be gum acacia. In some aspects, the shell can contain 0.01 wt. % to 0.1 wt. % of the binder, based on the total weight of the shell.

In some aspects, the weight ratio of the core and shell in the fertilizer granule can be 90:10 to 99.5:0.5. In some aspects, the core can make up about 90 % to 99.5 % or 93 % to 99 %, or 96 % to 98 % of the total weight of the fertilizer granule. In some aspects, the shell can make up about 0.5 % to 10 %, or 1 % to 7 %, or 2 to 4 % of the total weight of the fertilizer granule.

In some aspects, the fertilizer granule can contain a binding layer positioned between the core and at least a portion of the shell. The fertilizer granule can contain a binding layer wherein at least a portion of the binding layer is positioned between the core and the shell. The binding layer can contain an adhesive binder suitable for use in a fertilizer. In certain aspects, the adhesive binder can be gum acacia.

The core and/or the fertilizer granule can be of any suitable shape. Non-limiting shapes includes spherical, cuboidal, cylindrical, puck shape, oval, and oblong shapes, although cores and/or fertilizer granules having other shapes can also be made. In some aspects, the core and/or the fertilizer granule can be spherical. In some aspects, the core and/or the fertilizer granule can be independently of cylindrical shape with a circular, elliptical, ovular, triangular, square, rectangular, pentagonal, or hexagonal cross section, although a cylindrical shaped core having a cross-section of other shapes can also be made. In some aspects, the fertilizer granule can have a dimension such as length, width, height, and/or cross-sectional diameter between 0.5 mm to 6 mm. In some aspects, the fertilizer granule can have a substantially spherical shape with an average diameter 0.5 mm to 5 mm, preferably 1 mm to 4 mm.

In some aspects, the shell can cover at least 10 %, 20 %, 30 %, 40 %, or 10 % to 50 % of the outer surface of the core. In other aspects, the shell can cover a majority (e.g., greater than 50 %) of the outer surface of the core. In some aspects, the shell can cover greater than 50 %, at least 60 %, at least 70 %, at least 80 %, at least 90 %, or 100 % of the outer surface of the core. In certain aspects, the shell can cover 60 % to 100 %, or 80 % to 100 %, or 90 % to 100 % of the outer surface of the core. In some aspects, the fertilizer granule can be included in a composition. The composition can contain a plurality of the fertilizer granules.

Certain aspects are directed to a fertilizer blend. The fertilizer blend can contain 10 wt. % to 90 wt. % of a first particulate fertilizer composition and 10 wt. % to 90 wt. % of a second particulate fertilizer composition. The first particulate fertilizer composition can contain a fertilizer granule described herein (e.g., a core and a shell containing fertilizer granule). In certain aspects, the first particulate fertilizer composition can contain a plurality of the core shell containing fertilizer granules described herein. The second particulate fertilizer composition can be different from the first particulate fertilizer composition. In some aspects, the second particulate fertilizer composition can contain a phosphorus fertilizer and/or a potassium fertilizer. In some aspects, the second particulate fertilizer composition can contain diammonium phosphate (DAP), single super phosphate (SSP), triple super phosphate (TSP), or muriate of potash (MOP), or any combinations thereof. In certain aspects, the second particulate fertilizer composition can contain single super phosphate (SSP), and the fertilizer blend can contain 40 wt. % to 60 wt. % of the first particulate fertilizer composition, and 40 wt. % to 60 wt. % of SSP. In certain aspects, the second particulate fertilizer composition can contain single super phosphate (SSP) and muriate of potash (MOP), and the fertilizer blend can contain 15 wt. % to 40 wt. % of the first particulate fertilizer composition, 45 wt. % to 70 wt. % of SSP and 10 wt. % to 30 wt. % of MOP. In certain aspects, the second particulate fertilizer composition can contain diammonium phosphate (DAP) and muriate of potash (MOP), and the fertilizer blend can contain 15 wt. % to 40 wt. % of the first particulate fertilizer composition, 30 wt. % to 50 wt. % of DAP, and 20 wt. % to 45 wt. % of MOP. In certain aspects, the second particulate fertilizer composition can contain triple super phosphate (TSP), and the fertilizer blend can contain 40 wt. % to 60 wt. % of the first particulate fertilizer composition, and 40 wt. % to 60 wt. % of TSP.

The second particulate fertilizer composition can contain particles having a variety of shapes and sizes. Non-limiting shapes of the second particulate fertilizer composition particles include spherical, cylindrical, puck, oval, or oblong shape. The size of the second particulate fertilizer composition particles can be larger, smaller and/or the same as the core-shell particles of the first particulate fertilizer composition. In some aspects, the second particulate fertilizer composition particles can have a longest dimension 0.5 to 8 mm. In some particular aspects, the second particulate fertilizer particles can have a substantially spherical shape with diameter 0.5 mm to 6 mm.

In some instances, the fertilizer blend can be stable (e.g., not increase the moisture content more than by 10 %, 20 %, 30 %, 40 %, 50 %, 60 %, 70 %, 80 %, 90 %, 100 %, 110 %, 120 %, 130 %, 140 %, 150 %, 160 %, 170 %, 180 %, 190 %, 200 %, 250 %, 300 %, or greater, or remain free flowing, or remain free of caking, or remain non-sticky) when stored for 2, 3, 4, 5, 6, 7, 8, 9, or 10 weeks, or 3, 4, 5, 6, 7, 8, 9, 10, 11, or 12 months, as per IFDC S-104 protocol.

Also described herein is a method for making a fertilizer granule, such as a core shell fertilizer granule described herein. The method can include forming or providing a core containing urea, and coating an outer surface of the core with the UCS adduct to form the fertilizer granule. In certain aspects, the core can be coated with a powdered material containing the UCS adduct. The powdered material can contain particles having an average size of 10 microns to 80 microns, and can further contain urea (e.g. present freely) and calcium sulfate (e.g. present freely). The powdered material can be formed by grinding and/or crushing granules containing the UCS adduct. In some aspects, the core can be formed as a prill or by pelletizing, compacting, and/or granulating a composition containing urea and optionally a urease inhibitor, a nitrification inhibitor, one or more secondary nutrients, and/or one or more micronutrients.

In certain aspects, the core and the UCS adduct, e.g., powdered material containing the UCS adduct, can be mixed in presence of water to form a coating of the UCS adduct over at least a portion of an outer surface of the core to form the fertilizer granule. In some aspects, the water can be hot water, having a temperature of 50 °C to 80 °C. In certain aspects, the coating can be formed by rotating the core and the powdered material in a container. In certain aspects, 10 to 50 ml of the water, e.g., hot water, can be added per 1000 gm of total weight of the core and powdered material. In some aspects, the core and the powdered material can be premixed, prior to addition of the water. In certain aspects, optional shell ingredients such as a urease inhibitor, a nitrification inhibitor, one or more secondary nutrients, one or more micronutrients, or one or more binder, or any combinations thereof can be added to the container and the coating (e.g. the shell) on the core can include the optional shell ingredients. The container can be any suitable container, including but not limited to a granulator such as pan granulator, or a drum.

In certain aspects, the core can be contacted with a binder to form a binding layer, coating at least a portion of an outer surface of the core, to form a binder coated core. The binder coated core can be contacted with the UCS adduct, e.g., powdered material containing the UCS adduct, to form a coating of the UCS adduct over at least a portion of an outer surface of the binder coated core, to form the fertilizer granule. In certain aspects, the core can be contacted with a binder solution containing the binder. The binder solution can be an aqueous solution containing the binder. The aqueous solution can contain a binder to water weight ratio of 0.8:1 to 1:0.8. In certain aspects, the binder can be gum acacia. In some aspects, the core, binder solution, and UCS adduct can be contacted in a container. In certain aspects, optional shell ingredients such as a urease inhibitor, a nitrification inhibitor, one or more secondary nutrients, one or more micronutrients, or one or more binder, or any combinations thereof can be added to the container and the coating (e.g. the shell) on the core, e.g. binder coated core, can include the optional shell ingredients. The container can be any suitable container, including but not limited to a granulator such as pan granulator, or a drum.

Also described herein is a method of making a fertilizer blend. The method can include forming and/or providing a first particulate fertilizer composition described herein, providing a second particulate fertilizer composition described herein, and contacting the first particulate fertilizer composition with the second particulate fertilizer composition at a weight ratio 1:9 to 9:1 to form a blend of the first particulate fertilizer composition and the second particulate fertilizer composition. The first particulate fertilizer composition and the second particulate fertilizer composition can be blended by a method known in the art.

One aspect of the present invention is directed to a method of fertilizing, the method comprising applying a fertilizer granule and/or a fertilizer blend described herein to at least a portion of a soil, a crop, or the soil and the crop. Also disclosed is a method of enhancing plant growth comprising applying to soil, the plant, or the soil and the plant an effective amount of a composition comprising a fertilizer blend of the present invention.

In the context of the present invention, fertilizer granules and/or fertilizer blend granules may also be referred to as a particle, granule, fertilizer particle, prill, or fertilizer prill.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "aqueous based," "aqueous base," "water based," and "water base" are defined as containing water or was previously contained in water before drying.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The term "substantially" and its variations are defined to include ranges within 10%, within 5%, within 1%, or within 0.5%.

The terms "inhibiting," or "reducing," or "preventing," or "avoiding," or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The phrase "and/or" can include "and" or "or." To illustrate, A, B, and/or C can include: A alone, B alone, C alone, a combination of A and B, a combination of A and C, a combination of B and C, or a combination of A, B, and C.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

Other objects, features and advantages of the present invention will become apparent from the following figures, detailed description, and examples.

### BRIEF DESCRIPTION OF THE DRAWINGS

Advantages of the present invention may become apparent to those skilled in the art with the benefit of the following detailed description and upon reference to the accompanying drawings. The drawings may not be to scale.
**FIG. 1****:** A) Cross-sectional view of a fertilizer granule according to an example of the present invention. B) Cross-sectional view of a fertilizer granule according to another example of the present invention.
**FIG. 2****:** illustrates a flowchart of a method for producing a fertilizer granule according to an example of the present invention.
**FIG. 3****:** illustrates a flowchart of a method for producing a fertilizer granule according to another example of the present invention.
**FIG. 4****:** A), B), C), and D) illustrate scanning electron microscopy (SEM) images of example UCS coated urea granules.
**FIG. 5****:** A), B), C), and D) illustrate scanning electron microscopy (SEM) images of example UCS coated urea granules.
**FIG. 6****:** Exemplary Energy-Dispersive X-ray spectroscopy (EDX) spectrum of the dark regions (A), grey regions (B), and bright regions (C) of FIG. 4A-D and the dark regions (D), grey regions (E), and bright regions (F) of FIG. 5A-D.
**FIG. 7****:** Formulation 1 of Table 1, at day 1 (A) and after 3 weeks (B) of storage. Formulation 4 of Table 1, at day 1 (C) and after 3 weeks (D) of storage. Formulation 7 of Table 1, at day 1 (E) and after 3 weeks (F) of storage.

### DETAILED DESCRIPTION OF THE INVENTION

The fertilizer granule of the present invention comprises a core containing urea and a shell comprising a urea calcium sulfate (UCS) adduct. The fertilizer blends of the present invention comprise blends of the core-shell fertilizer granules with at least one other fertilizer. As illustrated in a non-limiting manner in the Examples, it was found that fertilizer blends containing the UCS coated urea granules and other fertilizers are relatively stable over time and form no or less caking compared to comparative fertilizer blends containing uncoated urea.

These and other non-limiting aspects of the present invention are discussed in further detail in the following sections.

### A. Fertilizer Granules

The fertilizer granule comprises a core and a shell forming a coating on the core. 90 wt. % to 99.5 wt. % or at least any one of, equal to any one of, or between any two of 90, 91, 92, 93, 94, 95, 96, 97, 98, 99, and 99.5 wt. % of the fertilizer granule can be comprised of the core. 0.5 wt. % to 10 wt. % or at least any one of, equal to any one of, or between any two of 0.5, 1, 2, 3, 4, 5, 6, 7, 8, 9 and 10 wt. % of the fertilizer granule can be comprised of the shell. The shell can cover 5 to 100 %, or at least any one of, equal to any one of, or between any two of 5, 10, 15, 20, 25, 30, 35, 40, 45, 50, 55, 60, 65, 70, 75, 80, 85, 90, 95, 99, and 100 % of the outer surface of the core. In some aspects, the shell can have an average thickness of 20 microns to 60 microns, over the outer surface of the core.

The core comprises urea. The core comprises 90 wt. % to 100 wt. % or, at least any one of, equal to any one of, or between any two of 90, 91, 92, 93, 94, 95, 96, 97, 98, 99, 99.2, 99.4, 99.5, 99.6, 99.8, 99.9 and 100 wt. % of urea, based on the total weight of the core. In some aspects, additional fertilizer substances besides urea can be included or excluded in the core of the fertilizer granules. If included, additional fertilizers can be chosen based on the particular needs of certain types of soil, climate, or other growing conditions to maximize the efficacy of the fertilizer granule in enhancing plant growth and crop yield.

The core of the fertilizer granules can have desirable physical properties such as desired levels of abrasion resistance, granule strength, pelletizability, hygroscopicity, granule shape, and size distribution, which are important properties for the fertilizer core.

The shell comprises a UCS adduct. The UCS adduct can have the chemical formula of CaSO₄.4CO(NH₂)₂. In some aspects, the UCS adduct can be formed from urea and gypsum using the following reaction

Ca(H₂PO₄)₂·H₂O + 4CO(NH₂)₂ → Ca(H₂PO₄)₂·4CO(NH₂)₂ +H₂O

In some aspects, the shell can contain 20 wt. % to 100 wt. % or at least any one of, equal to any one of, or between any two of 20, 25, 30, 35, 40, 45, 50, 55, 60, 65, 70, 75, 80, 85, 90, 91, 92, 93, 94, 95, 96, 97, 98, 99, 99.2, 99.4, 99.5, 99.6, 99.8, 99.9, and 100 wt. % of the UCS adduct, based on the total weight of the shell. In some aspects, the shell can contain 30 wt. % to 90 wt. %, 40 wt. % to 85 wt. %, 45 wt. % to 80 wt. %, 40 wt. % to 50 wt. %, 45 wt. % to 55 wt. %, 45 wt. % to 50 wt. %, 70 wt. % to 80 wt. %, 75 wt. % to 80 wt. %, of the UCS adduct, based on the total weight of the shell. In some aspects, the shell can further contain urea (e.g. present freely, not as the adduct) and calcium sulfate (e.g. present freely, not as the adduct). The total wt. % of the UCS adduct, urea (e.g. present freely), and calcium sulfate (e.g. present freely) in the shell can be 95 wt. % to 100 wt. %, or at least any one of, equal to any one of, or between any two of 95, 96, 97, 98, 99, 99.2, 99.4, 99.5, 99.6, 99.8, 99.9, and 100 wt. %. In some aspects, the shell can contain i) 18 wt. % to 40 wt. %, or at least any one of, equal to any one of, or between any two of 18, 20, 22, 24, 26, 28, 30, 32, 34, 36, 38, and 40 wt. % of nitrogen (N) (e.g., from urea, present freely and as adduct), ii) 2 wt. % to 18 wt. %, or at least any one of, equal to any one of, or between any two of 2, 4, 6, 8, 10, 12, 14, 16, and 18 wt. % of calcium (Ca) (e.g., from calcium sulfate, present freely and as adduct) and iii) 1 wt. % to 12 wt. %, or at least any one of, equal to any one of, or between any two of 1, 2, 4, 6, 8, 10, and 12 wt. of sulfur (S) (e.g., from calcium sulfate, present freely and as adduct), based on the total weight of the shell. In some aspects, wt. % of nitrogen (N) to calcium (Ca) in the shell can be 15:1 to 1:1, preferably 5:1 to 2:1, or at least any one of, equal to any one of, or between any two of 15:1, 14:1, 13:1, 12:1, 11:1, 10:1, 9:1, 8:1, 7:1, 6:1, 5:1, 4.5:1, 4:1, 3.5:1, 3:1, 2.5:1, 2:1 and 1:1.

The core and/or the shell can optionally contain independently a urease inhibitor, a nitrification inhibitor, one or more secondary nutrients, one or more micronutrients, or one or more binders, or any combinations thereof. In some aspects, the urease inhibitor can be a thiophosphoric triamide derivative, such as N-(n-butyl) thiophosphoric triamide (NBPT). In some aspects, the core can contain 0.01 wt. % to 0.07 wt. % of a urease inhibitor, such as NBPT, based on the total weight of the core. In some aspects, the shell can contain 0.01 wt. % to 0.07 wt. % of a urease inhibitor, such as NBPT, based on the total weight of the shell. In some aspects, the nitrification inhibitor can be 3,4-dimethylpyrazole phosphate (DMPP), thio-urea (TU), dicyandiamide (DCD), 2-Chloro-6-(trichloromethyl)-pyridine (Nitrapyrin), 5- Ethoxy-3-trichloromethyl -1, 2, 4-thiadiazol (Terrazole), 2-Amino-4-chloro-6-methyl- pyrimidine (AM), 2-Mercapto-benzothiazole (MBT), or 2-Sulfanimalamidothiazole (ST) or any combination thereof, preferably DCD. In some aspects, the core can contain 0.01 wt. % to 0.04 wt. % of a nitrification inhibitor, such as DCD, based on the total weight of the core. In some aspects, the shell can contain 0.01 wt. % to 0.04 wt. % of a nitrification inhibitor, such as DCD, based on the total weight of the shell. The micronutrient can be a botanically acceptable form of an inorganic or organometallic compound such as boron, copper, iron, chloride, manganese, molybdenum, nickel, or zinc. In some aspects, the core can contain 0.1 wt. % to 1.0 wt. % of micronutrients, based on the total weight of the core. In some aspects, the shell can contain 0.1 wt. % to 1.0 wt. % of micronutrients, based on the total weight of the shell. A secondary nutrient is a substance that can deliver calcium, magnesium, and/or sulfur to a plant. In some aspects, the core can contain 0.5 wt. % to 2.5 wt. % of secondary nutrients, such as calcium sulfate, lime, superphosphate, or any combinations thereof, based on the total weight of the core. In some aspects, the shell in addition to calcium and sulfate present as calcium sulfate (freely and as the adduct) can contain 0.5 wt. % to 2.5 wt. % of other secondary nutrients, such as lime, superphosphate, or any combinations thereof, based on the total weight of the shell.

The binder can be gum acacia, xanthan gum, guar gum, calcium lignosulphonate, etc. In some aspects, the shell can contain 0.001 wt. % to 0.01 wt. % of the binder, based on the total weight of the shell. In some instances, the binder can be homogenously comprised in the coating containing the UCS adduct. In some instances, the binder is comprised in a layer at least partially located between the core and a layer containing the UCS adduct. In some instances, a layer comprising the binder can comprise 50, 60, 70, 80, 90, 92, 94, 95, 96, 97, 98, 99, or 100 wt. % of the binder. In some instances, a layer comprising the binder covers 50, 60, 70, 80, 90, 92, 94, 95, 96, 97, 98, 99, or 100 % of the surface of the core.

Moisture content of the fertilizer granule can be less than 0.6 wt. %, such as 0.4 wt. % to 0.6 wt. %.

The total Ca content of the fertilizer granuleis 2.8 wt. % or less, or 2.4 wt. % or less, or 0.1 wt. % to 2.2 wt. %, or at most any one of, equal to any one of, or between any two of 0.1, 0.2, 0.4, 0.6, 0.8, 1, 1.2, 1.4, 1.6, 1.8, 2, and 2.2 wt. % based on the weight of the fertilizer granule. The total nitrogen (N) content of the fertilizer granule is 41 wt. % or more, or 41 wt. % to 46.2 wt. %, or at least any one of, equal to any one of, or between any two of 41, 42, 43, 44, 45, 46, 46.1, and 46.2 wt. % based on the weight of the fertilizer granule.

In some particular aspects, the core can consist of or consist essentially of urea and moisture. In some particular aspects, the shell can consist of or consist essentially of urea, UCS adduct, calcium, sulfate, and moisture. In some particular aspects, the fertilizer granule can consist of or consist essentially of urea, UCS adduct, calcium, sulfate, and moisture.

The core and the fertilizer granule independently can be of any suitable shape. Non-limiting shapes include spherical, cuboidal, cylindrical, puck shape, oval, and oblong shapes. In some aspects, the core and/or the fertilizer granule can be of cylindrical shape with a circular, elliptical, ovular, triangular, square, rectangular, pentagonal, or hexagonal cross section, although cylindrical shaped core having a cross-section of other shapes can also be made. In some aspects, the fertilizer granule can have a dimension such as length, width, height and/or cross-sectional diameter between 0.5 mm to 6 mm, or at least any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the fertilizer granule can have a substantially spherical shape with an average diameter 0.5 mm to 5 mm, or 1 mm to 4 mm, at least any one of, equal to any one of, or between any two of 0.5 mm, 1 mm, 1.5 mm, 2 mm, 2.5 mm, 3 mm, 3.5 mm, 4 mm, 4.5 mm, and 5 mm. In some aspects, the core can have a dimension such as length, width, height and/or cross-sectional diameter between 0.5 mm to 6 mm, or at least any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the core can have a substantially spherical shape with an average diameter 0.5 mm to 5 mm, or 1 mm to 4 mm, or at least any one of, equal to any one of, or between any two of 0.5 mm, 1 mm, 1.5 mm, 2 mm, 2.5 mm, 3 mm, 3.5 mm, 4 mm, 4.5 mm, and 5 mm.

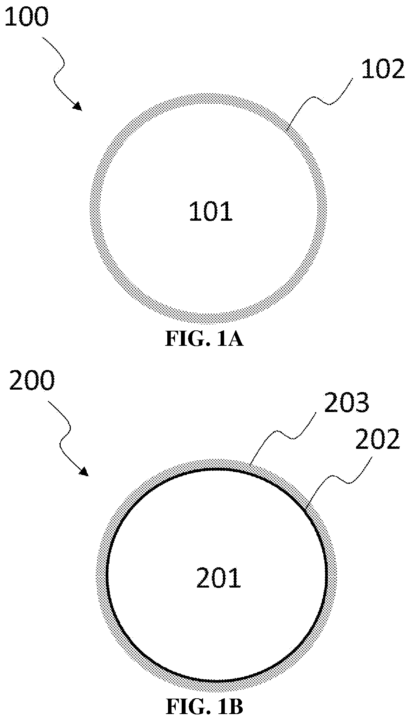

FIG. 1A shows cross-section of a fertilizer granule **100** according to one example of the present invention, containing a core **101,** and a shell **102** coating an outer surface of the core **101.** The shell **102** is represented as covering the entire outer surface of the core **101,** although fertilizer granules with the shell **102** covering a portion of the outer surface of the core **101** can readily be made. FIG. 1B shows cross-section of a fertilizer granule **200** according to another example of the present invention, containing a core **201,** a binding layer **202** coating an outer surface of the core **201,** and a shell **203** coating an outer surface of the binder coated core (e.g. binding layer coated core). The binding layer **202** is represented as covering the entire outer surface of the core **201,** although fertilizer granules with the binding layer **202** covering a portion of the outer surface of the core **201** can readily be made. The shell **203** is represented as covering the entire outer surface of the binder coated core, although fertilizer granules with the shell **203** covering a portion of the outer surface of the binder coated core can readily be made.

The fertilizer granules described herein can be comprised in a composition useful for application to soil.

### B. Fertilizer blend

In addition to the fertilizer granules, the composition may include other fertilizer compounds, micronutrients, primary nutrients, additional urea, additional nitrogen nutrients, insecticides, herbicides, or fungicides, or combinations thereof. In some instances, the fertilizer granules are comprised in a fertilizer blend. The fertilizer blend of the present invention comprises i) 10 wt. % to 90 wt. % or at least, equal to, or between any two of 10 wt. %, 15 wt. %, 20 wt. %, 25 wt. %, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. %, and 90 wt. %, of a first particulate fertilizer composition and ii) 10 wt. % to 90 wt. % or at least, equal to, or between any two of 10 wt. %, 15 wt. %, 20 wt. %, 25 wt. %, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. %, and 90 wt. %, of a second particulate fertilizer composition. The first and second particulate fertilizer compositions can each include a plurality of particles-e.g., the first fertilizer composition comprises a plurality of the aforementioned core-shell particles/granules, and the second fertilizer composition can include a plurality of the second fertilizer particles; the blend can include a mixture of a plurality of the core-shell particles and second fertilizer particles. The fertilizer blend can be a homogenous or heterogeneous blend of the first particulate fertilizer composition and the second particulate fertilizer composition.

The second particulate fertilizer composition can contain 50 wt. % to 100 wt. %, or at least, equal to, or between any two of 50 wt. %, 55 wt. %, 60 wt. %, 65 wt. %, 70 wt. %, 75 wt. %, 80 wt. %, 85 wt. %, 90 wt. %, 95 wt. %, and 100 wt. %, of an additional plant fertilizer other than urea, based on the total weight of the second particulate fertilizer composition.

The additional plant fertilizer can include a phosphorus (P) source, a nitrogen (N) source other than urea, a potassium (K) source, a nitrogen and phosphorus (NP) source, a phosphorus and potassium (PK) source, a nitrogen, phosphorus, and potassium (NPK) source, a micronutrient, a calcium source, a sulfur source, or any combination thereof. In some aspects, the micronutrient can include a botanically acceptable form of an inorganic or organometallic compound such as boron, copper, iron, chloride, manganese, molybdenum, nickel, and/or zinc. In some aspects, the second particulate fertilizer composition can contain ammonium sulfate, monoammonium phosphate (MAP), diammonium phosphate (DAP), muriate of potash (MOP), monopotassium phosphate (MKP), triple super phosphate (TSP), rock phosphate, single super phosphate (SSP) or any combination thereof.

In some aspects, the second particulate fertilizer composition can further include urea. In some aspects, the second particulate fertilizer composition can contain two or more additional plant fertilizers other than urea. In some particular aspects, the second particulate fertilizer composition can contain the two or more additional plant fertilizers in a single particle. In some particular aspects, the two or more of additional plant fertilizers can be included in second particulate fertilizer composition as two or more types of particles. In certain aspects, the second particulate can contain diammonium phosphate (DAP), single super phosphate (SSP), triple super phosphate (TSP), or muriate of potash (MOP), or a combination thereof.

In some particular aspects, the second particulate fertilizer composition can contain SSP, and the fertilizer blend can contain i) 40 wt. % to 60 wt. %, or at least, equal to, or between any two of 40 wt. %, 45 wt. %, 50 wt. %, 55 wt. %, and 60 wt. %, of the first particulate fertilizer composition; and ii) 40 wt. % to 60 wt. %, or at least, equal to, or between any two of 40 wt. %, 45 wt. %, 50 wt. %, 55 wt. %, and 60 wt. %, of SSP, based on total weight of the fertilizer blend.

In some particular aspects, the second particulate fertilizer composition can contain SSP, and MOP, the fertilizer blend can contain i) 15 wt. % to 40 wt. %, or at least, equal to, or between any two of 15 wt. %, 20 wt. %, 25 wt. %, 30 wt. %, 35 wt. %, and 40 wt. %, of the first particulate fertilizer composition; ii) 45 wt. % to 70 wt. %, or at least, equal to, or between any two of 45 wt. %, 50 wt. %, 55 wt. %, 60 wt. %, 65 wt. %, and 70 wt. %, of SSP; and iii) 10 wt. % to 30 wt. %, or at least, equal to, or between any two of 10 wt. %, 15 wt. %, 20 wt. %, 25 wt. %, and 30 wt. %, of MOP, based on total weight of the fertilizer blend.

In some particular aspects, the second particulate fertilizer composition can contain DAP, and MOP, the fertilizer blend can contain i) 15 wt. % to 40 wt. %, or at least, equal to, or between any two of 15 wt. %, 20 wt. %, 25 wt. %, 30 wt. %, 35 wt. %, and 40 wt. %, of the first particulate fertilizer composition; ii) 30 wt. % to 50 wt. %, or at least, equal to, or between any two of 30 wt. %, 35 wt. %, 40 wt. %, 45 wt. %, and 50 wt. %, of DAP; and iii) 20 wt. % to 45 wt. %, or at least, equal to, or between any two of 20 wt. %, 25 wt. %, 30 wt. %, 35 wt. %, 40 wt. %, and 45 wt. %, of MOP, based on total weight of the fertilizer blend.

In some particular aspects, the second particulate fertilizer composition can contain TSP, and the fertilizer blend can contain i) 40 wt. % to 60 wt. %, or at least, equal to, or between any two of 40 wt. %, 45 wt. %, 50 wt. %, 55 wt. %, and 60 wt. %, of the first particulate fertilizer composition; and ii) 40 wt. % to 60 wt. %, or at least, equal to, or between any two of 40 wt. %, 45 wt. %, 50 wt. %, 55 wt. %, and 60 wt. %, of TSP, based on total weight of the fertilizer blend.

The fertilizer blend particles of the present invention such as the first particulate fertilizer composition particles and/or the second particulate fertilizer composition particles can have desirable physical properties such as desired levels of abrasion resistance, particle strength, pelletizability, hygroscopicity, particle shape, and size distribution, which are important properties for the fertilizer.

The fertilizer blend described herein can be comprised in a composition useful for application to soil. In addition to the fertilizer blend, the composition may include other fertilizer compounds, micronutrients, primary nutrients, additional urea, additional nitrogen nutrients, insecticides, herbicides, or fungicides, or combinations thereof.

In some instances, the fertilizer blend can be stable (e.g., not increase the moisture content more than by 10 %, 20 %, 30 %, 40 %, 50 %, 60 %, 70 %, 80 %, 90 %, 100 %, 110 %, 120 %, 130 %, 140 %, 150 %, 160 %, 170 %, 180 %, 190 %, 200 %, 250 %, 300 %, or greater, or remain free flowing, or remain free of caking, or remain non-sticky) when stored for 2, 3, 4, 5, 6, 7, 8, 9, or 10 weeks, or 3, 4, 5, 6, 7, 8, 9, 10, 11, or 12 months, as per IFDC S-104 protocol.

### C. Method of Making a Fertilizer Granule

Also described herein is a method for making a fertilizer granule, which can include providing or forming a core containing urea, contacting and coating at least a portion of an outer surface of the core with the UCS adduct to form a shell and the core shell containing fertilizer granule.

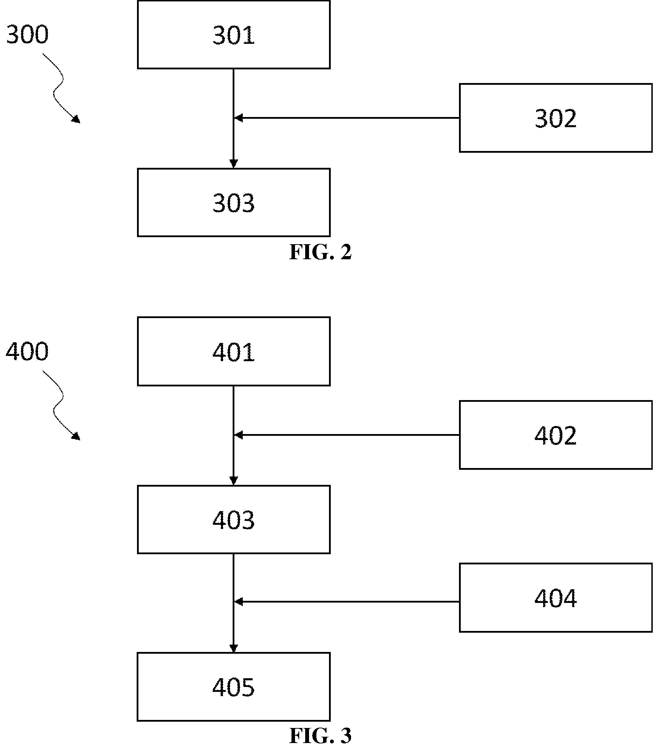

FIG. 2 shows a flow chart of a method **300** for making a fertilizer granule according to an example of the present invention. Referring to FIG. 2, a urea granule **301** can be coated with a powdered material containing the UCS adduct **302** to form a shell over the core and a core shell containing fertilizer granule **303.** FIG. 3 shows a flow chart of a method **400** for making a fertilizer granule according to another example of the present invention. Referring to FIG. 3, a urea granule **401** can be coated with a binder **402** to form a binder coated core **403,** and the binder coated core **403** can be coated with a powdered material containing the UCS adduct **404** to form a shell over the binder coated core and a core shell containing fertilizer granule **405.**

In certain aspects, the core and the UCS adduct can be mixed in the presence of water to form a coating of the UCS adduct over at least a portion of an outer surface of the core to form the fertilizer granule. In some aspects, a powdered material containing the UCS adduct can be mixed with the core. The powdered material can contain particles having an average size of 10 microns to 80 microns, and can further contain urea (e.g., present freely) and calcium sulfate (e.g., present freely). The powdered material can be formed by grinding and/or crushing granules containing the UCS adduct. In some aspects, the water can be hot water, having a temperature of 50 °C to 80 °C. In certain aspects, the coating can be formed by rotating the core and the powdered material in a container. In some aspects, the container can be rotated at 10 to 12 RPM, during coating of the UCS powder. In certain aspects, 10 to 50 ml, or at least, equal to, or between any two of 10, 15, 20, 25, 35, 40, 45 and 50 ml of the water, e.g., hot water can be added per 1000 gm of total weight of the core and powdered material. In some aspects, the core and the powdered material can be premixed, prior to addition of the water. In certain aspects, optional shell ingredients such as a urease inhibitor, a nitrification inhibitor, one or more secondary nutrients, one or more micronutrients, or one or more binder, or any combinations thereof can be added to the container and the coating (e.g., the shell) on the core can include the optional shell ingredients. The container can be any suitable container, including but not limited to a granulator such as drum granulator, pugmill, pan granulator, or a drum.

In certain aspects, the core can be contacted with a binder to form a binding layer, coating at least a portion of an outer surface of the core, to form a binder coated core. The binder coated core can be contacted with the UCS adduct, e.g., powdered material containing the UCS adduct, to form a coating of the UCS adduct over at least a portion of an outer surface of the binder coated core, to form the fertilizer granule. In certain aspects, the binder can be contacted with the core as a binder solution. The binder solution can be an aqueous solution containing the binder. The aqueous solution can contain a binder to water weight ratio of 0.8:1 to 1:0.8 or at least any one of, equal to any one of, or between any two of 0.8:1, 0.9:1, 1:1, 1:0.9, and 1:0.8. In certain aspects, the binder can be gum acacia. In some aspects, the core, binder solution, and UCS adduct can be contacted in a container. In certain aspects, optional shell ingredients such as a urease inhibitor, a nitrification inhibitor, one or more secondary nutrients, one or more micronutrients, or one or more binder, or any combinations thereof can be added to the container and the coating (e.g. the shell) on the core, e.g., binder coated core, can include the optional shell ingredients. The container can be any suitable container, including but not limited to a granulator such as drum granulator, pugmill, pan granulator, or a drum.

In some aspects, the core can be formed as a prill or by pelletizing, compacting, and/or granulating a composition containing urea and optionally a urease inhibitor, a nitrification inhibitor, one or more secondary nutrients, or one or more micronutrients, or a combination thereof.

### D. Method of Making a Fertilizer Blend

The fertilizer blend of the present invention can be formed by blending the first particulate fertilizer composition and the second particulate fertilizer composition at a weight ratio of 1:9 to 9:1 or at least, equal to, or between any two of 1:9, 2:8, 3:7, 4:6, 5:5, 6:4, 7:3, 8:2 and 9:1. The first particulate fertilizer composition and the second particulate fertilizer composition can be blended by a method known in the art. For example, the first particulate fertilizer composition and the second particulate fertilizer composition can be blended by dry blending in particulate forms. In some aspects, the first particulate fertilizer composition in particulate form can be contacted and can be mixed with the second particulate fertilizer composition in particulate form, to form the fertilizer blend. The first particulate fertilizer composition and second particulate fertilizer composition can be blended, e.g., mixed, in an apparatus such as a blender known in the art.

### E. Methods of Using Fertilizer Granules and/or the blend

The fertilizer granule(s), composition containing the fertilizer granule(s), and fertilizer blend containing the fertilizer granule(s) of the present invention can be used in methods of increasing the amount of nitrogen and optionally other plant nutrients in soil and of enhancing plant growth. The method of the invention includes applying to the soil, a crop, or the soil and the crop, a fertilizer granule(s) of the present invention. The method may include increasing the growth and yield of crops, trees, ornamentals, etc., such as, for example, palm, coconut, rice, wheat, corn, barley, oats, and/or soybeans. The method can include applying the fertilizer blend of the present invention to at least one of a soil, an organism, a liquid carrier, a liquid solvent, etc.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes. The Gymnosperms may include plants from the Araucariaceae, Cupressaceae, Pinaceae, Podocarpaceae, Sciadopitaceae, Taxaceae, Cycadaceae, and Ginkgoaceae families. The Angiosperms may include plants from the Aceraceae, Agavaceae, Anacardiaceae, Annonaceae, Apocynaceae, Aquifoliaceae, Araliaceae, Arecaceae, Asphodelaceae, Asteraceae, Berberidaceae, Betulaceae, Bignoniaceae, Bombacaceae, Boraginaceae, Burseraceae, Buxaceae, Canellaceae, Cannabaceae, Capparidaceae, Caprifoliaceae, Caricaceae, Casuarinaceae, Celastraceae, Cercidiphyllaceae, Chrysobalanaceae, Clusiaceae, Combretaceae, Cornaceae, Cyrillaceae, Davidsoniaceae, Ebenaceae, Elaeagnaceae, Ericaceae, Euphorbiaceae, Fabaceae, Fagaceae, Grossulariaceae, Hamamelidaceae, Hippocastanaceae, Illiciaceae, Juglandaceae, Lauraceae, Lecythidaceae, Lythraceae, Magnoliaceae, Malpighiaceae, Malvaceae, Melastomataceae, Meliaceae, Moraceae, Moringaceae, Muntingiaceae, Myoporaceae, Myricaceae, Myrsinaceae, Myrtaceae, Nothofagaceae, Nyctaginaceae, Nyssaceae, Olacaceae, Oleaceae, Oxalidaceae, Pandanaceae, Papaveraceae, Phyllanthaceae, Pittosporaceae, Platanaceae, Poaceae, Polygonaceae, Proteaceae, Punicaceae, Rhamnaceae, Rhizophoraceae, Rosaceae, Rubiaceae, Rutaceae, Salicaceae, Sapindaceae, Sapotaceae, Simaroubaceae, Solanaceae, Staphyleaceae, Sterculiaceae, Strelitziaceae, Styracaceae, Surianaceae, Symplocaceae, Tamaricaceae, Theaceae, Theophrastaceae, Thymelaeaceae, Tiliaceae, Ulmaceae, Verbenaceae, and/or Vitaceae family.

The effectiveness of compositions comprising the fertilizer granule(s) of the present invention can be ascertained by measuring the amount of nitrogen and optionally other nutrients in the soil at various times after applying the fertilizer composition to the soil. It is understood that different soils have different characteristics, which can affect the stability of the nitrogen in the soil. The effectiveness of a fertilizer composition can also be directly compared to other fertilizer compositions (e.g. containing uncoated urea granules instead of the UCS coated urea granules) by doing a side-by-side comparison in the same soil under the same conditions.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

### Fertilizer granules containing UCS coated urea

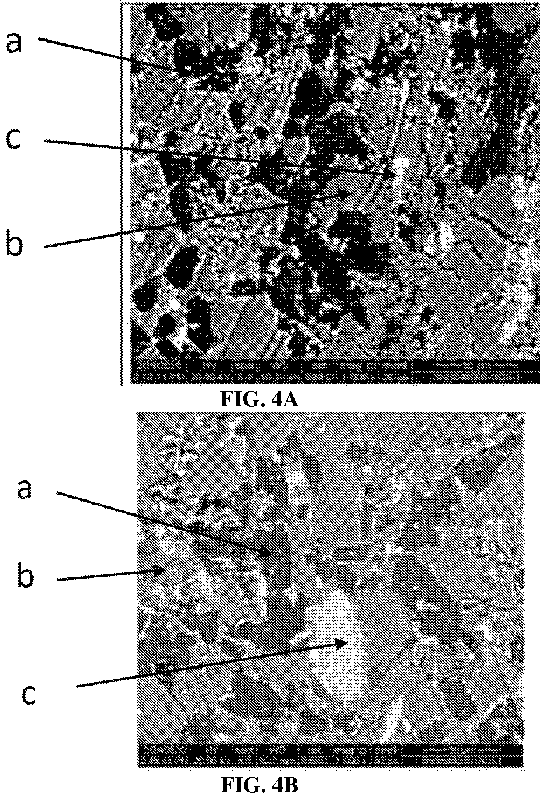

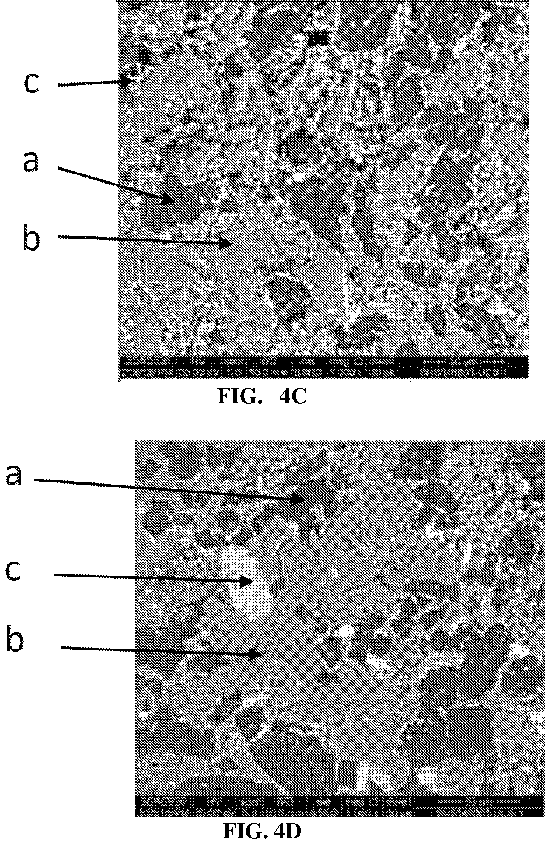

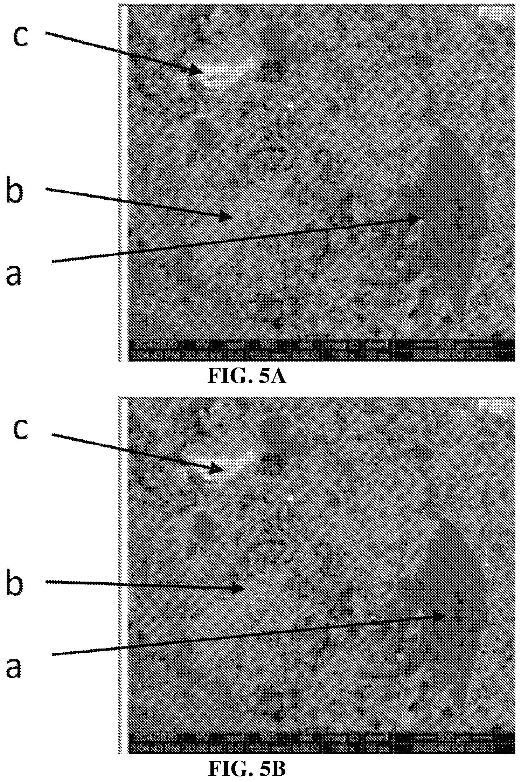

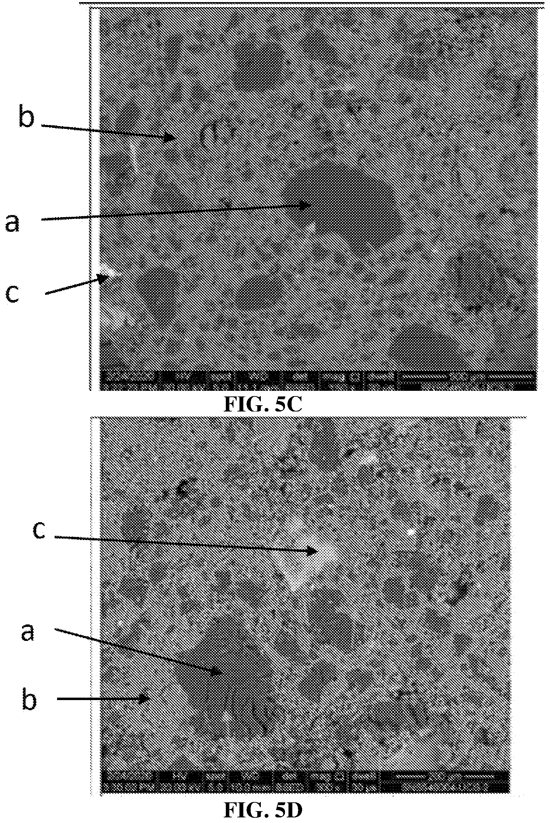

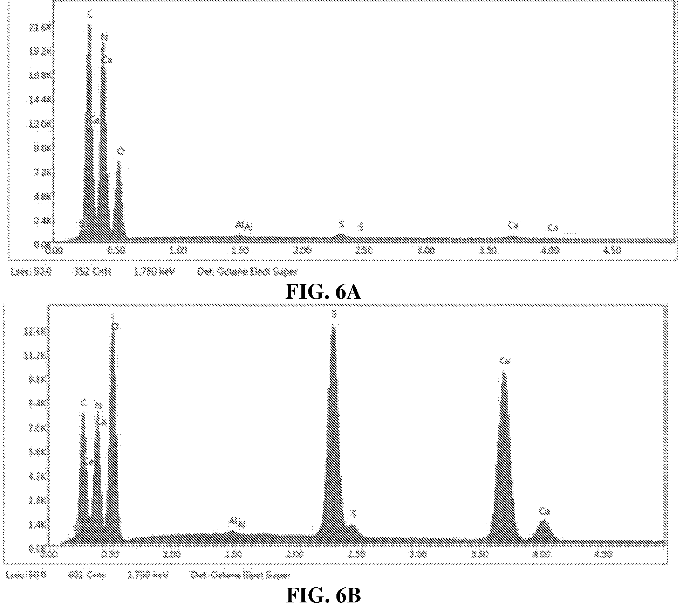

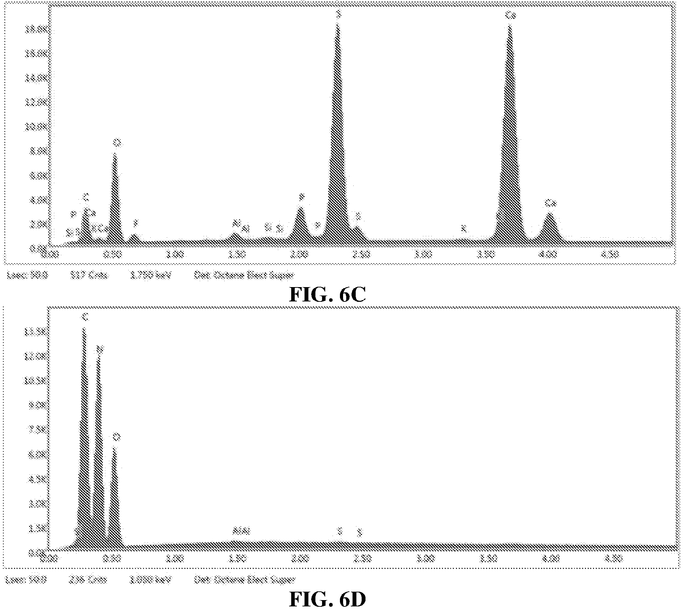

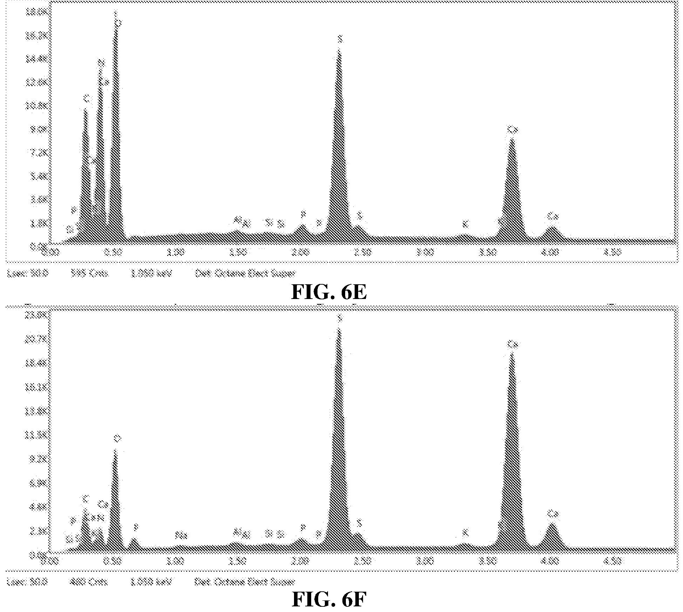

UCS coated urea was produced by a pan granulation method. 800 g of urea granules was added to a pan granulator. 200 g of a powdered material (10 to 80 micron) containing UCS adduct was added to the granulator. 20 ml to 30 ml of 80 °C water was added to the granulator by spraying. The urea and powdered material in the granulator was rotated and was mixed in the presence of the water to form fertilizer granules containing UCS coated urea, where the coat comprised 2 to 4 wt. % of the total weight of the UCS coated urea. Two parallel experiments were performed. In a first experiment, the powdered material (labeled as UCS-27) used for coating had 27.6 wt. % of N, 9.13 wt. % of Ca, and 6.86 wt. % of S, and a UCS adduct content of 75.62 wt. %. In a second experiment, the powdered material (labeled as UCS-33) used for coating had 34 wt. % of N, 5.22 wt. % of Ca, and 6.08 wt. % of S, and a UCS adduct content of 48 wt. %. FIG. 4 A-D show Scanning electron microscopy (SEM) images of four UCS coated urea granules, granules 1-4, of UCS-27 obtained in example 1. FIG. 5 A-D show SEM images of granules 1-4 at a higher magnification. In FIG. 4A-D and FIG. 5A-D, the dark regions are composed of urea (marked with arrow a), the grey regions are composed of urea calcium sulfate adduct (marked with arrow b), and the white/bright regions are composed of calcium sulfate (marked with arrow c). FIG. 6 A, B, and C, show Energy-dispersive X-ray spectroscopy (EDX) spectrum of the dark regions (a), grey regions (b), and bright regions (c), respectively, exemplified in marked FIG. 4A-D. FIG. 6D, E, and F, show EDX spectrum of the dark regions (a), grey regions (b), and bright regions (c), , respectively, exemplified marked in FIG. 5A-D.

### Example 2

### Fertilizer granules containing binder and UCS coated urea

Urea granules were added to a coating drum. A 1:1 aqueous solution containing gum acacia was sprayed onto the urea granules in the drum to form a coating of the binder, e.g. gum acacia, on the urea granules forming binder coated urea. A powdered material containing UCS adduct was added to the coating drum and was contacted with the binder coated urea granules to form a UCS coating layer on the granules. The amount of the powdered material used for coating was varied to obtain fertilizer granules containing 2, 3, and 4 wt. % of coating based on the weight of the fertilizer granule.

### Example 3

### Fertilizer blends containing UCS coated urea and a second fertilizer composition

The UCS coated urea granules obtained from experiment 1 and 2 of Example 1 were blended with other fertilizer compositions. The composition of the blends (formulations 6 to 11) are provided in Table 1. Stability of the blends were tested using IFDC protocol (IFDC S-104 "Chemical Compatibility in Blends"). For comparison purpose, blends containing uncoated urea were also prepared (formulations 1 to 5, Table 1).

Briefly, each of the blends was prepared in a 200 ml glass bottle. For each blend, approximately two-thirds of the glass bottle was filled with the blends. The freshly made blend samples were tightly capped in the glass bottles and placed in an oven at 30 °C for at least 30 days. The blends were inspected daily, and any wetting, caking, disintegration, or gas evolution was noted. The blends were rated after three weeks of storage, based on the following compatibility rating
D = Dry, Free flowing - (Compatible) Pass;
W1 = moisture patches, but usable - (Predominantly Compatible) Pass;
W2 = moist and slightly sticky, but probably usable - (Predominantly Compatible) Pass;
W3 = wet through and sticky, unsuitable for use - (Predominantly Incompatible) Fail;
W4 = very wet, unsuitable for use - (Incompatible) Fail;
H = hard caked together, unsuitable for use - (Incompatible) Fail.

**Table 1:**

| **Formulation No.** | **1st Ingredient in blend (Weight in g)** | **2nd Ingredient in blend (Weight in g)** | **3rd Ingredient in blend (Weight in g)** | **IFDC stability Remark after three weeks** |
|---|---|---|---|---|
| 1 | Urea (60g) | SSP (60g) | - | Sticky Mass (W4) |
| 2 | Urea (39g) | SSP (61g) | | Sticky Mass (W4) |
| 3 | Urea (21g) | SSP (64g) | MOP (14g) | Sticky Mass (W4) |
| 4 | Urea (60g) | TSP (60g) | | Sticky Mass & hard Caking at bottom (W4/H) |
| 5 | Urea (27g) | DAP (40g) | MOP (32g) | Hard Caking at bottom (H) |
| 6 | UCS-33 coated urea (60g) | SSP (60g) | | Free flow/ No caking (D) |
| 7 | UCS-33 coated urea (28g) | SSP (58g) | MOP (16g) | Free flow/ No caking (D) |
| 8 | UCS-27 coated urea (60g) | SSP (60g) | | Free flow/ No caking (D) |
| 9 | UCS-27 coated urea (28g) | SSP (58g) | MOP (16g) | Free flow/ No caking (D) |
| 10 | UCS-27 coated urea (UCS 27) (27g) | DAP (40g) | MOP (32g) | Free flow/ No caking (D) |
| 11 | UCS-33 coated urea (60g) | TSP (60g) | | Free flow/ No caking |

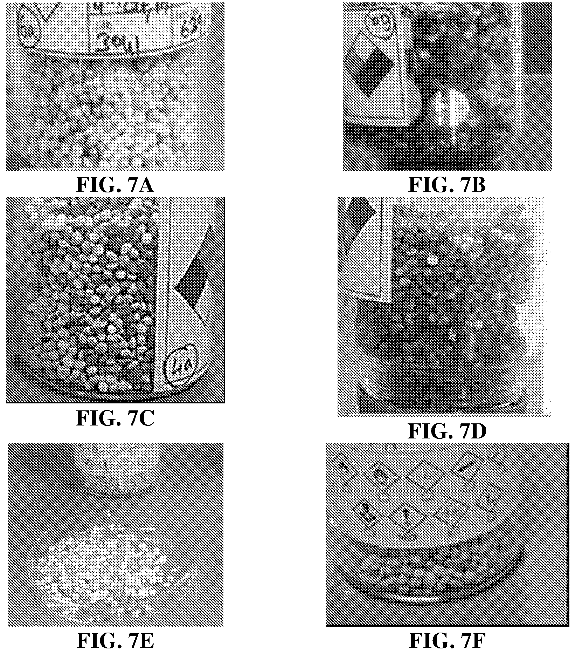

The compatibility rating of the blends are provided in Table 1. As can be seen from Table 1, after 3 weeks of storage, blends containing UCS coated urea were free flowing and showed little or no caking, whereas blends containing uncoated urea formed sticky mass and/or hard caking. FIG. 7A and 7B shows formulation 1, containing uncoated urea and SSP, at day 1 and after 3 weeks of storage. FIG. 7C and 7D shows formulation 4, containing uncoated urea and TSP, at day 1 and after 3 weeks of storage. FIG. 7E and 7F shows formulation 7, containing UCS coated urea and SSP, at day 1 and 3 weeks of storage. As can be seen from FIG. 7A-F, while the formulation 7 remains dry and free flowing after 3 weeks of storage, formulation 1 and 4 become sticky mass, after 3 weeks of storage. Thus, Table 1, and FIG. 7A-F show coating urea with UCS adduct stabilizes blends of urea with other fertilizer compositions.

## Claims

1. A fertilizer granule comprising:
a core comprising at least 90 wt. % of urea; and
a shell comprising a urea calcium sulfate (UCS) adduct, wherein the shell covers at least a portion of an outer surface of the core, and
wherein the calcium (Ca) content of the fertilizer granule is 2.8 wt. % or less and the nitrogen (N) content of the fertilizer granule is 41 wt. % or more.

2. The fertilizer granule of claim 1, wherein the shell comprises 20 wt. % to 100 wt. % of the UCS adduct, based on total weight of the shell.

3. The fertilizer granule of any one of claims 1 to 2, wherein the core further comprises a urease inhibitor, a nitrification inhibitor, one or more secondary nutrients, or one or more micro nutrients, or any combinations thereof.

4. The fertilizer granule of any one of claims 1 to 3, wherein the shell further comprises urea and calcium sulfate.

5. The fertilizer granule of any one of claims 1 to 4, wherein at least 95 wt. % of the shell is comprised of the UCS adduct, urea, and calcium sulfate.

6. The fertilizer granule of any one of claims 1 to 5, wherein wt.% ratio of N to Ca in the shell is 15:1 to 1:1 and/or the Ca content of the fertilizer granule is 1.8 wt. % or less.

7. The fertilizer granule of any one of claims 1 to 6, wherein the UCS adduct has a chemical formula of CaSO₄.4CO(NH₂)₂.

8. The fertilizer granule of any one of claims 1 to 7, wherein the shell further comprises a urease inhibitor, a nitrification inhibitor, one or more secondary nutrients, one or more micro nutrients, or one or more binders, or any combinations thereof.

9. The fertilizer granule of any one of claims 1 to 8, further comprising a binding layer, wherein at least a portion of the binding layer is positioned between the core and the shell.

10. The fertilizer granule of any one of claims 1 to 9, wherein weight ratio of the core and shell is 90:10 to 99.5:0.5.

11. A fertilizer blend comprising:
10 wt. % to 90 wt. % of a first particulate fertilizer composition comprising a fertilizer granule of any one of claims 1 to 10; and
10 wt. % to 90 wt. % of a second particulate fertilizer composition, wherein the first particulate fertilizer composition is different than the second particulate fertilizer composition,
wherein the second particulate fertilizer composition is blended with the first particulate fertilizer composition.

12. The fertilizer blend of claim 11, wherein:
the second particulate fertilizer composition comprises a phosphorus fertilizer; and/or
the second particulate fertilizer composition comprises a potassium fertilizer.

13. The fertilizer blend of any one of claims 11 to 12, wherein the second particulate fertilizer composition comprises diammonium phosphate (DAP), single super phosphate (SSP), triple super phosphate (TSP), or muriate of potash (MOP), or any combinations thereof.

14. The fertilizer blend of any one of claims 11 to 13, wherein:
(i) the second particulate fertilizer composition comprises single super phosphate (SSP), and the fertilizer blend comprises 40 wt. % to 60 wt. % of the first fertilizer composition, and 40 wt. % to 60 wt. % of SSP;
(ii) the second particulate fertilizer composition comprises single super phosphate (SSP), and muriate of potash (MOP), and the fertilizer blend comprises 15 wt. % to 40 wt. % of the first fertilizer composition, 45 wt. % to 70 wt. % of SSP, and 10 wt. % to 30 wt. % of MOP;
(iii) the second particulate fertilizer composition comprises diammonium phosphate (DAP), and muriate of potash (MOP), and the fertilizer blend comprises 15 wt. % to 40 wt. % of the first fertilizer composition, 30 wt. % to 50 wt. % of DAP, and 20 wt. % to 45 wt. % of MOP; or
(iv) the second particulate fertilizer composition comprises triple super phosphate (TSP), and the fertilizer blend comprises 40 wt. % to 60 wt. % of the first fertilizer composition, and 40 wt. % to 60 wt. % of TSP.

15. A method of fertilizing, the method comprising applying a fertilizer granule of any one of claims 1 to 10 to at least a portion of a soil, a crop, or the soil and the crop.

## Patentansprüche

1. Düngemittelgranulat, umfassend:
einen Kern umfassend mindestens 90 Gew.-% Harnstoff; und
eine Schale, umfassend ein Harnstoff-Calciumsulfat (UCS) -Addukt, wobei die Schale mindestens einen Abschnitt einer Außenfläche des Kerns bedeckt, und
wobei der Calcium (Ca) -Gehalt des Düngemittelgranulats 2,8 Gew.-% oder weniger beträgt und der Stickstoff (N) -Gehalt des Düngemittelgranulats 41 Gew.-% oder mehr beträgt.

2. Düngemittelgranulat nach Anspruch 1, wobei die Schale 20 Gew.-% bis 100 Gew.-% des UCS-Addukts umfasst, basierend auf dem Gesamtgewicht der Schale.

3. Düngemittelgranulat nach einem der Ansprüche 1 bis 2, wobei der Kern ferner einen Urease-Inhibitor, einen Nitrifikations-Inhibitor, einen oder mehrere Sekundärnährstoffe oder einen oder mehrere Mikronährstoffe oder jegliche Kombination davon umfasst.

4. Düngemittelgranulat nach einem der Ansprüche 1 bis 3, wobei die Schale ferner Harnstoff und Calciumsulfat umfasst.

5. Düngemittelgranulat nach einem der Ansprüche 1 bis 4, wobei mindestens 95 Gew.-% der Schale aus dem UCS-Addukt, Harnstoff und Calciumsulfat bestehen.

6. Düngemittelgranulat nach einem der Ansprüche 1 bis 5, wobei Gew.-%-Verhältnis von N zu Ca in der Schale 15:1 bis 1:1 beträgt und/oder der Ca-Gehalt des Düngemittelgranulats 1,8 Gew.-% oder weniger beträgt.

7. Düngemittelgranulat nach einem der Ansprüche 1 bis 6, wobei das UCS-Addukt eine chemische Formel von CaSO₄.4CO(NH₂)₂ aufweist.

8. Düngemittelgranulat nach einem der Ansprüche 1 bis 7, wobei die Schale ferner einen Urease-Inhibitor, einen Nitrifikations-Inhibitor, einen oder mehrere Sekundärnährstoffe, einen oder mehrere Mikronährstoffe oder ein oder mehrere Bindemittel oder jegliche Kombination davon umfasst.

9. Düngemittelgranulat nach einem der Ansprüche 1 bis 8, ferner umfassend eine Bindeschicht, wobei mindestens ein Abschnitt der Bindeschicht zwischen dem Kern und der Schale positioniert ist.

10. Düngemittelgranulat nach einem der Ansprüche 1 bis 9, wobei das Gewichtsverhältnis des Kerns und der Schale 90:10 bis 99,5:0,5 beträgt.

11. Düngemittelmischung, umfassend:
10 Gew.-% bis 90 Gew.-% einer ersten partikelförmigen Düngemittelzusammensetzung, umfassend ein Düngemittelgranulat nach einem der Ansprüche 1 bis 10; und
10 Gew.-% bis 90 Gew.-% einer zweiten partikelförmigen Düngemittelzusammensetzung, wobei die erste partikelförmige Düngemittelzusammensetzung anders als die zweite partikelförmige Düngemittelzusammensetzung ist,
wobei die zweite partikelförmige Düngemittelzusammensetzung mit der ersten partikelförmigen Düngemittelzusammensetzung vermischt ist.

12. Düngemittelmischung nach Anspruch 11, wobei:
die zweite partikelförmige Düngemittelzusammensetzung ein Phosphor-Düngemittel umfasst; und/oder
die zweite partikelförmige Düngemittelzusammensetzung ein Kalium-Düngemittel umfasst.

13. Düngemittelmischung nach einem der Ansprüche 11 bis 12, wobei die zweite partikelförmige Düngemittelzusammensetzung Diammoniumphosphat (DAP), Einfachsuperphosphat (SSP), Dreifachsuperphosphat (TSP) oder Kaliumchlorid (MOP) oder jegliche Kombinationen davon umfasst.

14. Düngemittelmischung nach einem der Ansprüche 11 bis 13, wobei:
(i) die zweite partikelförmige Düngemittelzusammensetzung Einfachsuperphosphat (SSP) umfasst und die Düngemittelmischung 40 Gew.-% bis 60 Gew.-% der ersten Düngemittelzusammensetzung und 40 Gew.-% bis 60 Gew.-% SSP umfasst;
(ii) die zweite partikelförmige Düngemittelzusammensetzung Einfachsuperphosphat (SSP) und Kaliumchlorid (MOP) umfasst und die Düngemittelmischung 15 Gew.-% bis 40 Gew.-% der ersten Düngemittelzusammensetzung, 45 Gew.-% bis 70 Gew.-% SSP und 10 Gew.-% bis 30 Gew.-% MOP umfasst;
(iii) die zweite partikelförmige Düngemittelzusammensetzung Diammoniumphosphat (DAP) und Kaliumchlorid (MOP) umfasst und die Düngemittelmischung 15 Gew.-% bis 40 Gew.-% der ersten Düngemittelzusammensetzung, 30 Gew.-% bis 50 Gew.-% DAP und 20 Gew.-% bis 45 Gew.-% MOP umfasst; oder
(iv) die zweite partikelförmige Düngemittelzusammensetzung Dreifachsuperphosphat (TSP) umfasst und die Düngemittelmischung 40 Gew.-% bis 60 Gew.-% der ersten Düngemittelzusammensetzung und 40 Gew.-% bis 60 Gew.-% TSP umfasst.

15. Düngungsverfahren, wobei das Verfahren das Auftragen eines Düngemittelgranulats nach einem der Ansprüche 1 bis 10 auf mindestens einen Abschnitt eines Bodens, einer Pflanze oder des Bodens und der Pflanze umfasst.

## Revendications

1. Granule d'engrais, comprenant :
un noyau comprenant au moins 90 % en poids d'urée ; et
une enveloppe comprenant un adduit urée-sulfate de calcium (UCS), dans lequel l'enveloppe recouvre au moins une partie d'une surface extérieure du noyau, et
dans lequel la teneur en calcium (Ca) du granule d'engrais est de 2,8 % en poids ou moins et la teneur en azote (N) du granule d'engrais est de 41 % en poids ou plus.

2. Granule d'engrais de la revendication 1, dans lequel l'enveloppe comprend de 20 % en poids à 100 % en poids de l'adduit UCS, sur la base du poids total de l'enveloppe.

3. Granule d'engrais de l'une quelconque des revendications 1 et 2, dans lequel le noyau comprend en outre un inhibiteur d'uréase, un inhibiteur de nitrification, un ou plusieurs nutriments secondaires, ou un ou plusieurs micronutriments, ou de quelconques combinaisons de ceux-ci.

4. Granule d'engrais de l'une quelconque des revendications 1 à 3, dans lequel l'enveloppe comprend en outre de l'urée et du sulfate de calcium.

5. Granule d'engrais de l'une quelconque des revendications 1 à 4, dans lequel au moins 95 % en poids de l'enveloppe est composé de l'adduit UCS, d'urée, et de sulfate de calcium.

6. Granule d'engrais de l'une quelconque des revendications 1 à 5, dans lequel le rapport % en poids de N par rapport à Ca dans l'enveloppe est de 15 : 1 à 1 : 1 et/ou la teneur en Ca du granule d'engrais est de 1,8 % en poids ou moins.

7. Granule d'engrais de l'une quelconque des revendications 1 à 6, dans lequel l'adduit UCS a une formule chimique de CaSO₄.4CO(NH₂)₂.

8. Granule d'engrais de l'une quelconque des revendications 1 à 7, dans lequel l'enveloppe comprend en outre un inhibiteur d'uréase, un inhibiteur de nitrification, un ou plusieurs nutriments secondaires, un ou plusieurs micronutriments, ou un ou plusieurs liants, ou de quelconques combinaisons de ceux-ci.

9. Granule d'engrais de l'une quelconque des revendications 1 à 8, comprenant en outre une couche de liaison, dans lequel au moins une partie de la couche de liaison est positionnée entre le noyau et l'enveloppe.

10. Granule d'engrais de l'une quelconque des revendications 1 à 9, dans lequel le rapport pondéral du noyau et enveloppe est de 90 : 10 à 99,5 : 0,5.

11. Mélange d'engrais, comprenant :
de 10 % en poids à 90 % en poids d'une première composition d'engrais particulaire comprenant un granule d'engrais de l'une quelconque des revendications 1 à 10 ; et
de 10 % en poids à 90 % en poids d'une seconde composition d'engrais particulaire, dans lequel la première composition d'engrais particulaire est différente de la seconde composition d'engrais particulaire,
dans lequel la seconde composition d'engrais particulaire est mélangée avec la première composition d'engrais particulaire.

12. Mélange d'engrais de la revendication 11, dans lequel :
la seconde composition d'engrais particulaire comprend un engrais à base de phosphore ; et/ou
la seconde composition d'engrais particulaire comprend un engrais à base de potassium.

13. Mélange d'engrais de l'une quelconque des revendications 11 et 12, dans lequel la seconde composition d'engrais particulaire comprend du phosphate de diammonium (DAP), du superphosphate simple (SSP), du superphosphate triple (TSP), ou du muriate de potasse (MOP), ou de quelconques combinaisons de ceux-ci.

14. Mélange d'engrais de l'une quelconque des revendications 11 à 13, dans lequel :
(i) la seconde composition d'engrais particulaire comprend du superphosphate simple (SSP), et le mélange d'engrais comprend de 40 % en poids à 60 % en poids de la première composition d'engrais, et de 40 % en poids à 60 % en poids de SSP ;
(ii) la seconde composition d'engrais particulaire comprend du superphosphate simple (SSP), et du muriate de potasse (MOP), et le mélange d'engrais comprend de 15 % en poids à 40 % en poids de la première composition d'engrais, de 45 % en poids à 70 % en poids de SSP, et de 10 % en poids à 30 % en poids de MOP ;
(iii) la seconde composition d'engrais particulaire comprend du phosphate de diammonium (DAP), et du muriate de potasse (MOP), et le mélange d'engrais comprend de 15 % en poids à 40 % en poids de la première composition d'engrais, de 30 % en poids à 50 % en poids de DAP, et de 20 % en poids à 45 % en poids de MOP ; ou
(iv) la seconde composition d'engrais particulaire comprend du superphosphate triple (TSP), et le mélange d'engrais comprend de 40 % en poids à 60 % en poids de la première composition d'engrais, et de 40 % en poids à 60 % en poids de TSP.

15. Procédé de fertilisation, le procédé comprenant l'application d'un granule d'engrais de l'une quelconque des revendications 1 à 10 sur au moins une partie d'un sol, d'une culture, ou du sol et de la culture.
